# EUROPEAN PATENT SPECIFICATION

(11) **EP 2 325 395 B1**
(45) Date of publication and mention of the grant of the patent: **12.03.2014**
(21) Application number: 09014490.8
(22) Date of filing: 20.11.2009
(51) Int. Cl.: E01H 1/08, B24C 3/06, B24C 9/00

(54) **High efficiency shotpeening machine for the treatment of road and motorway paving, airport runways, car parks and service stations, concrete and steel platbands, surfaces of granite, porphyry and so on**
Hochleistungs-Kugelstrahlmaschine zur Behandlung von Straßen- und Autobahnbelägen, Flughafenpisten, Parkplätzen und Tankstellen, Beton- und Stahlkämpfern, Granitoberflächen und dergleichen
Machine de grenaillage à haute efficacité pour le traitement du pavage des routes et autoroutes, pistes d'aéroport, parcs de stationnement et stations-services, plates-bandes en béton et acier, surfaces de granit, porphyrie, et autres

(43) Date of publication of application: 25.05.2011
(73) Proprietor: Trisha Anstalt, 6908 Lugano-Massagno (CH)
(72) Inventor:
(74) Representative: Pagani, Franco

(56) References cited:
- EP-A1- 0 964 101
- US-A- 3 934 373
- US-A- 4 376 358
- US-A- 5 291 697

## Description

The present invention refers to a high efficiency shotpeening machine for the treatment of road and motorway paving, airport runways, car parks, service stations, ports and lorry terminals, concrete and steel pavements, surfaces of granite and porphyry and the like, according to the preamble of claim 1.

The Applicant is working in the manufacturing of machines for the treatment of the paving of the road, airport and industrial surfaces.

Even tough the Applicant is a young Company, the Applicant makes use of the collaboration of the technicians with proved experience in the specific field. In fact, some collaborators/assistants have a ten-year experience of about 5.000.000 m² of treated surfaces and four carried out machines behind them.

The most important fields of use of the subject machine are the following:
- *in the field of airports for the de-gumming of the runways and the cleaning of the parking areas, as well* as *the removal of the traffic signs,*
- *in the field of roads for the restoration of the micro and macro surface roughness and the removal of the traffic signs,*
- *the preparation of platbands of concrete for bridges and viaducts,*
- *the cleaning of service stations and car parks,*
- *the cleaning and restoration of roughness on surfaces of granite, porphyry and so on.*

At the end of 80s the use of the shotpeening machines extends to the road sector from the industrial one, where they were used for the removal of industrial paints, cleaning of areas contaminated by oily liquids or for the simple preparation of the surfaces before a new treatment.

The coming of these machines in the road sector has originated a remarkable interest and the reached results caused the demand for shotpeening in various areas where it was necessary to improve the adherence, then restore the micro-macro surface roughness in short time and without big radical interventions.

The considerable request pushed the specialists of the sector to design machines capable of increasingly large outputs, coming to the carrying out of a proper yard machine.
Clearly that has implied for the manufacturer and operator a big satisfaction but mostly many problems.

At the beginning, first of all, the problem has come of the dimensions and the operation of the machines themselves, for which it has been provided designing a machine with an internal combustion engine instead of an electrical one.

Then the dimensions have increased from 250 mm of working width of the first machines to 500 mm of the following up to 800-1500 mm and now with the machine subject of this invention to reach today 2500-3000 mm and beyond.

Big problems come from the treatment of the employed abrasive, to free it from stones and bituminized sands, in particular these last have originated not few problems.

The high acceleration, undergone by the micro-spheres inside the turbine implies the production of a high quantity of heat that triggers a chemical reaction of the bitumen parts, reviving them, tempering them and then making them sticky.

In the ten-year experience of studies, research and development, the Applicant has first worked to solve the above mentioned drawbacks, making use of the performed testing and the experience gained by its technicians on the field and subsequently together with the collaboration of design partners, has elaborated a new turbine bench, in particular carrying a group with opposed turbines for removal of traffic signs, de-gumming of airport surfaces and roughening of roads and motorways.
With the increased dimensions and the improvements embodied during the years, the duration of the big interventions becomes shorter, the increase of the traffic and the resulting reduction of the spaces available to park the vehicles used for the transport (lorries and trailers), the need to be forced to leave the yard as soon as possible due to external reasons and the increase of the yard costs have forced the Applicant to study the setting up of the shotpeening machine subject of this invention again on a chassis like this described in the Patent EP0964101.

In this way, coming as said before from a long experience, besides of study also of yard, we have tried to maintain the flexibility of use and the handling characteristics of a yard vehicle from one side, without renounce or jeopardize the safety and the stability of the convoy during the transfers on the road. Further in case of breakdown of the auxiliary system, the possibility is foreseen to leave the yard ensuring the return to the shop, being the main mechanics of the lorry independent and then with a priority concept of absolute reliability. Avoiding in this way to hold up the traffic or to occupy the roadway with the relevant obstruction, eliminating at the same time the risk to jeopardize the road or airport traffic.

Other shotpeening machines are known to the Applicant, keeping all the mentioned drawbacks without solving the above problems.

### European Companies:

As far as we know the following four European Companies carried out one or more prototypes:
Trimmer www.trimmer.it

### Shotpeening machine Trimmer:

Trimmer is an Italian Company working in the manufacturing of shotpeening machines, with seat in Castelnuovo Bocca d'Adda, in the province of Lodi. Their product line includes machines with working width from 200 to 800 mm. The operation is electrical, the micro-spheres are thrown toward the surface to be treated by means of the turbine, rebounding back toward the reservoir, before to reach it they are crossed by an air stream that provide for the removal of the fine powders; this cleaning method is called: "Shakeout-sander". Subsequently the micro-spheres come immediately back toward the turbine that provide for the immediate re-use. This typology of shotpeening machines is defined "closed cycle". Their use is well suitable to the treatment of surfaces of concrete, because from the shotpeening of said surface only "fine powders" come, then light and removable by the cleaning system with which the machine is equipped. Furthermore the limited dimensions and weight arrange for the use of the said machines also inside industrial and civil spaces, then less suitable to other uses, in particularly on the roads.
By the end of 90s, Trimmer has produced a prototype with working width of 1400 mm keeping the same principle of operation. The results have not been satisfactory because we know that the production was limited to a single model. Furthermore the shotpeening machine of Trimmer carried out on a yard chassis was not approved for road circulation.
Blastrac: (one unit) www.blastrac.com

### Shotpeening machine Blastrac Reproad;

Blastrac should be a Company of European origin, recently it was bought by an American Group. The principle of operation used by their machines refers to the same used by the shotpeening machines Trimmer.
They have also produced a prototype by the end of 90s..
To design said machine the same principle at closed cycle was used. As far as we know the results have not been impressive.
Subsequently the Swiss Company Reproad AG was equipped with the machine, we are not in the position to indicate or estimate the duration of use. Anyway we know that it is approved for road circulation, even if we suppose that the turbine group has the drawback to have to be removed for transfers on the road.

### Pavimental:

### Pavimental shotpeening machine (American shotpeening machine):

Pavimental, an Italian Company of Autostrade Group, leader in the construction and maintenance of the motorway paving, have acquired by mid 90s a first shotpeening machine of American manufacturing.
The shotpeening machine of American manufacturing was the fourth of five models produced during the years by Humble Equipment. Certainly the machine was intended for the treatment of surfaces of concrete but subsequently following a number of modifications the obtained results can be rated as sufficient. In comparison to the previous ones this machine represented the first step toward a technological innovation.

To increase the output the suction group was separated from the shotpeening group, further also the cleaning system was more efficient because it was integrated by a sieve that improved noticeably the cleaning of the abrasive.

Subsequently Pavimental have designed and produced with the support of external collaborators a new machine where the sieve has been replaced with the introduction of a "magnetic cobber". cleaning system.

The "magnetic cobber" is composed of a magnetic roll in front of which the abrasive mixed with the residual material passes, then being the abrasive ferrous material is attracted and separated from the impurities; the results shows some gaps, in fact with this cleaning system the metallic parts collected on the road surface (screws, bolts, nut and so on) come back to the reservoir, risking to get into the turbine and stop the machine, causing enormous damages.

### Pavimack: (Shotpeening machines Pavimack):

Pavimack a Swiss Company established by the end of 90s have produced two prototypes under licence of Trisha AG, Vaduz.
Their machines have represented noticeable novelties introducing many technology innovations among them the road circulation approval and the resizing of the ducts for a better cooling of the abrasive.
Unfortunately also their production was stopped by the second model, but they were just used by the personnel that had produced them, because of problems and difficulties of setting and tuning.

### Conclusions:

All mentioned Companies have designed and produced incomplete machines that can be defined prototypes leaving out design, functionality, reliability, manipulation, safety devices, approval for road circulation and so on. The complexity of use and control of the machine, the extent of the territory and the lack of qualified personnel had a negative influence on the said Companies and on the possibility to establish a commercial network.

It results from the analysis carried out by our technicians that there are a number of difficulties among them the control of the machine and the training of the personnel. In fact being question of prototypes there is not the possibility to find skilled personnel and the functions to be monitored and controlled at the same time are numerous and very complex, in particular about the setting and the tuning of the machine that depends on innumerable factors, among them we list hereafter the main ones:
- the reaction of the surface to the treatment;
- the best result obtained by the treatment in relation to the quality standard required by the customer and the surface itself;
- the reaction of every single component of the machine to the residual materials;
- the continuous adaptation of the various rates of rotation according to the work requirements;
- the cleanliness level of the abrasive;
- the board instrumentation (management, control and setting).

The major customers, by quantity of surfaces to be treated, are the bodies owners or managers of airports or motorways. Generally the performance of the work is entrusted by means of a tender. It is requested that the contractors satisfy a number of technical requirements like schedule and quality of the work.

Even thought the contractors, have to manage a new technology with personnel in training, they have in any case to ensure the continuity of the work, for this reason the manufacturer of he machine must be able to ensure high quality standard, reliability, easy use and an efficient Customer support..

The Applicant EXECO SRL to obviate the said drawbacks has designed a machine that provides for the most of these gaps.

The project of the Applicant includes a number of very important technological innovations that we will describe in detail, but we are sure that the insertion of PLC represents one of its strong points. The fact to allow the dialogue man-machine (management, control and setting), the remote diagnostics, the automation of the essential functions and the display of the condition of use of the machine, reduce the complexity of the use and management, besides to increase reliability and output.

Likewise with the use of the machines inside the airports and on the main roads and motorways, it was mainly necessary to increase the endurance as well as the output.

Subsequently, particularly in the airports, where the treatment starts from the centre line, some shadows have been found, that according to the persons in charge could disturb the pilots.

The shadows looked like the lines that we are used to see on the football fields, that came from the fact that, being the turbine inclined with respect to the centre line, it threw the micro-spheres oblique on the ground, then it was not able to clean behind the shadow zones caused by the material to be removed, looking from the top at the treated part we could notice half runway dark and half light, according to the direction of performance of the treatment itself.

These reasons have highlighted the need to redesign the whole machine.

In fact all the machines of the known technique have big problems of cleaning of the abrasive before to put it again in circle, avoiding worsening of its abrasion capabilities, from one side being it polluted by other residual materials and from the other side having stuck on itself bitumen, rubber and other materials.

Further the high temperatures reached by the abrasive lead to most worsen the situation.

An other problem is the setting that, notwithstanding the incipient digitalization of the management, control and setting systems, in presence of changes of the external and internal parameters of the machine, is not able to optimize the working sessions, going often out of range due to internal limitations of the machine (hardware, components, and so on) and external limitations coming from the working place (condition and composition of the surface to be treated, condition of the paving, temperature, meteorological conditions and so on).

Therefore the output of the work depends very much on the environmental and meteorological conditions, leading often to breaks of the operations for setting and maintenance.

Furthermore problems of endurance led to a revision of the machine in the sense of an increase and an enlargement of the suction box, consequently we thought also to a version where the whole vehicle is occupied by the suction box.

In this way increasing the endurance and allowing the perfect purification of the recycling air and the full collection of the residual material.

With the filled up lorry we had to think about the installation of the remaining equipment on a trailer, this appearing the best solution.

The availability of further space (trailer), allowed to deal with and to solve further drawbacks of the known technique;
- adopting more couples of turbines up to four turbines and beyond, instead of two, has allowed us to eliminate the shadow effect and to obtain an increased output;
- increasing the space we could increase the dimensions of the sieves and integrate them with the cleaning/cooling system with compressed air nozzles to cool the abrasive at the best, so that to block the chemical process of temper of the bitumen and of the rubbery impurities in contact with this.
- also the turbine bench was improved by a further modification adding a kind of intercooler, crossing the stream of micro-spheres in the zone between the outlet of the turbine and before the contact with the ground to take away a part of the heat accumulated during the phase of recycling and acceleration..

This modification has allowed extending the duration of the micro-spheres, further to treat surfaces with modified bitumen (polymeric bases) that no one of the competing manufacturers of the known technique is able to treat.

In fact while all the machines of the known technique present on the market perform the recovery of the materials (micro-spheres + debris) on the rebound and then at closed, blind, circuit, i.e. exploiting the force given to the micro-sphere in the throwing phase forcing it through a duct to come back into the reservoir, inside that a kind of cyclone is placed to remove the lighter powders, while the heavier ones together with the other heavier materials and possible stones remain on the bottom till the stoppage and then till the stop of the machine.

Not even the introduction of magnetic cobbers or sieves always exploiting the closed circuit has overcome the problem.

The solutions adopted by the competitors are essentially two,
the first one concerns the machine, making the throw orifice is easy, there are not additional costs for protections, labyrinths and something else to prevent the leakage;
the other one concerns the aspirator that in this case becomes of very limited dimensions both for the suction and the filtering part, because the needed quantity of air to be subsequently treated is really very small.

The machines according to the solutions described above certainly show very limited dimensions, consequently malleable, and if they are well suitable to small works for platbands of concrete and interventions inside sheds, they are fully unsuitable to the external use "on the road", furthermore on uneven roadbeds, they show very limited output (maximum working width less than 800 mm), furthermore they are hardly useable on bitumen paving both for the lack of suitable separators and for the excessive temperature reached by the abrasive generated by the blind circuit.

This invention refers to a high efficiency shotpeening machine, mobile, transportable on a lorry, built-in, self-propelled, for the treatment of road and motorway paving, airport runways, car parks, service stations, ports and lorry terminals, concrete and steel platbands, surfaces of granite and porphyry and so on.

In the same way also the applications and ways of use "ad hoc" with the methods of carrying out of the subject of the invention form integral part of this invention, as defined by claims 5-10.

More precisely this invention refers to a high efficiency self-propelled shotpeening machine for the treatment of the paving surfaces of bitumen conglomerate, asphalt, concrete or metal, including a shotpeening unit (A) and a suction and filtering unit (B), coupled together, with the features of claim 1, the shotpeening unit (A) including means of feeding of the external fresh air, means for the throwing of the micro-spheres, a series of ducts for the passage of the said micro-spheres together with the impurities collected and the residual materials of the working process, means for the separation, collection and recycling and a turbine bench provided with a feeder suitable shaped to channel the intake flow of the external air;

the suction and filtering unit including an aspirator or fan, a box to collect the material of the working cycle, an auxiliary and autonomous power generator for the distribution of motion independently from the machine through a hydrostatic transmission and for the generation of the hydraulic and electrical power needed by all the units and utilities interlocked to the machine,
characterised by the fact that the turbine bench of the unit (A) is provided with
- a group of 1 to 4 or more couples of turbines arranged at 45°, with opposed and counter-rotating cone-shaped bent vanes, with an intercooler after the turbines for the cooling of the micro-spheres, being said bench able to move horizontally, orthogonal to the direction of motion;
- a separation group including at least two cyclones provided with combs to slow the flow of the abrasive and covered in turn by an anti-abrasion protective layer, and at least two sieves with rotating drum and steel grille with free pins, each one with at least three stages, provided with compressed air washing/cooling system,
first for the separation of the fine powders and the residual material, then for the extraction of the cleaned micro-spheres and their recycling;
that the unit (B) includes,
- a suction group:
   including an aspirator box with up to 48 cartridges and more of polyester 100% fire-proof, cone-shaped, self-cleaning by means of compressed air,
   at least two high head centrifugal fans with inverted vanes and capable to produce a flow rate of at least 10000 m³/h, a device to check the stoppage and automatic control the washing

We give here below a detailed description of some preferred way of carrying out of the subject of this invention, in relation to the process and its application device, without taking away from the generality of the invention, with reference to the drawings of the attached figures.:
- Figures.1, 1a show respectively in lateral and back view, a particular form of carrying out the shotpeening machine installed on a 3-axle lorry;
- Figures. 2, 2a show respectively in lateral and back view, a particular form of carrying out the shotpeening machine installed on a 2-axle lorry;
- Figures. 3, 3a show respectively in lateral and back view, a particular form of carrying out the shotpeening machine installed on a 2-axle lorry; in a version suitable to the urban cycles;
- Figure 4, show in lateral view a particular form of carrying out the shotpeening machine installed on a 3-axle lorry, carrying the suction unit, provided with a trailer or 2-wheeled chariot, said trailer being devoted to the installation of the autonomous turbine bench and separation group only;
- Figure 5, shows in front view the shotpeening unit, with the description of the flows: air, abrasive, inert materials, powders;
- Figures 6, 6a, 6b, 6c show, respectively, front view, back view, cross section and plan of the dimensionally increased cyclone;
- Figures. 7, 7', 7", show, respectively, front and lateral views of the 3-stage sieve with wash/cooling system, with cover;
- Figures. 7a, 7'a, 7"a, show, respectively, front and lateral views of the 3-stage sieve with wash/cooling system, without cover;
- Figures 8, 8a, 8b, show, respectively, cross, front and lateral views of the elevator;

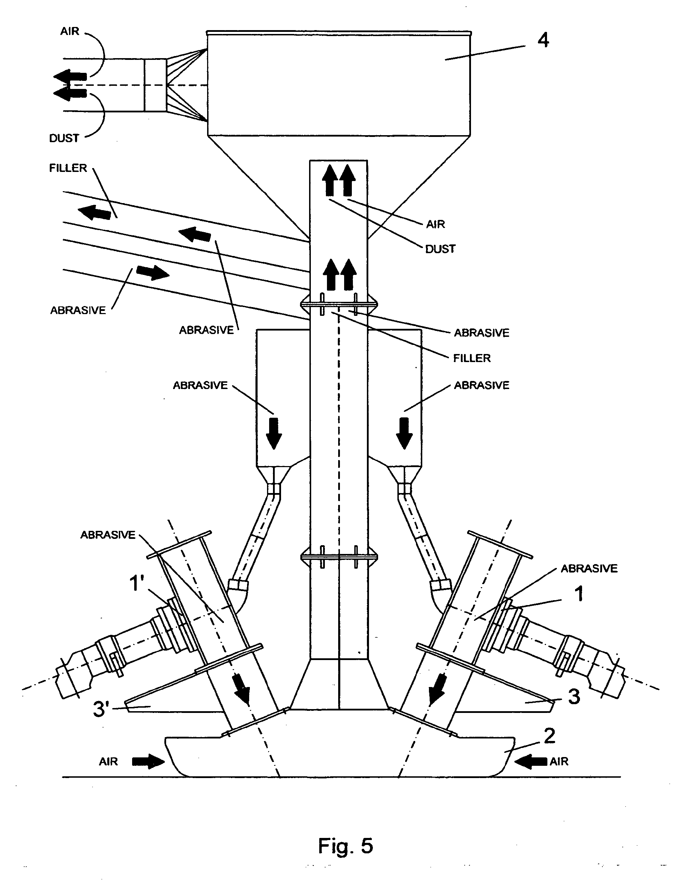

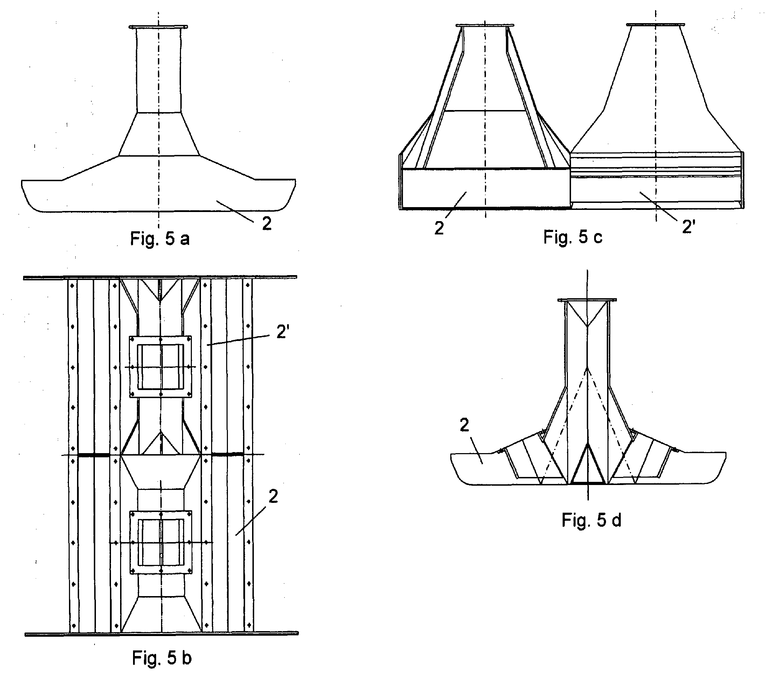

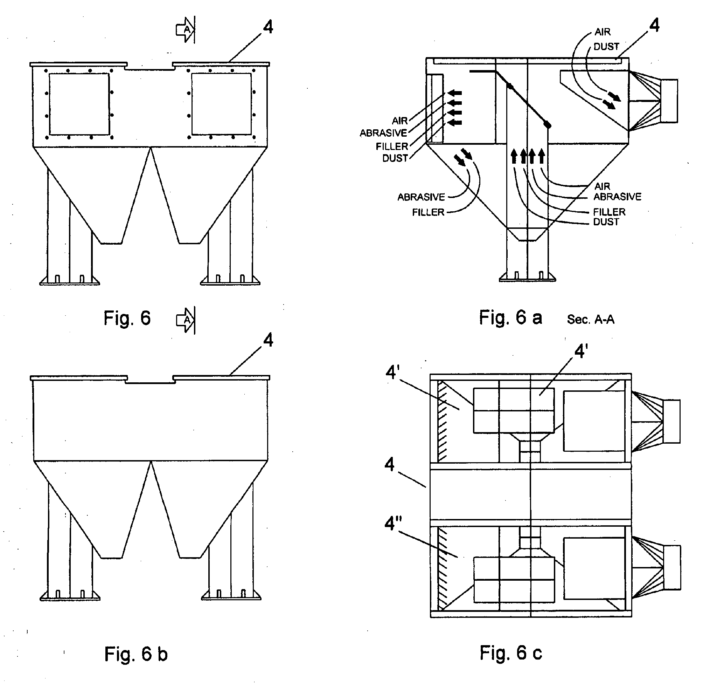

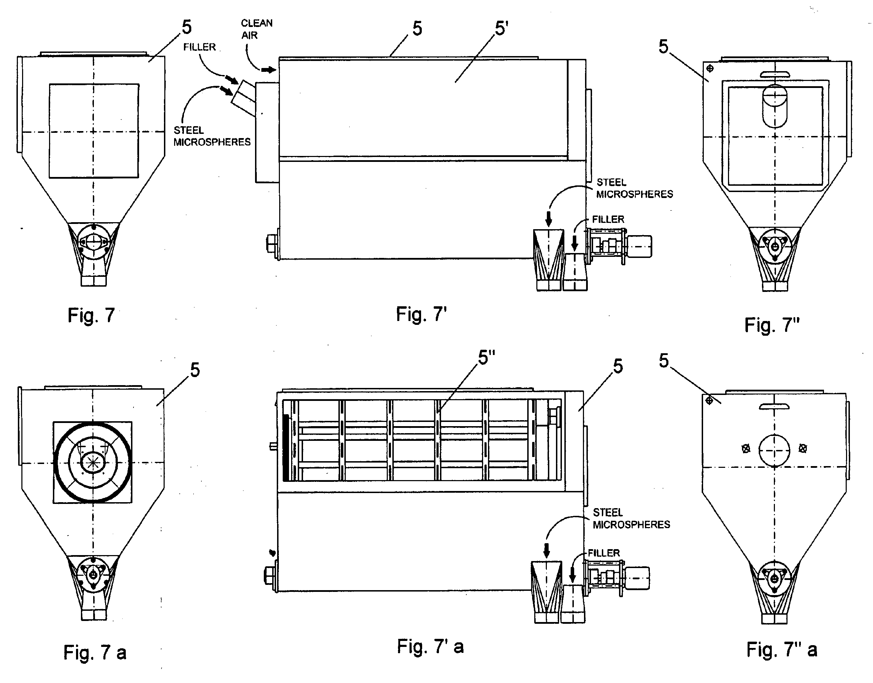

In the case of the subject of this invention:
The real shotpeening working unit consists of the abrasion and separation groups including respectively a turbine bench 1, 1', Figure 5, and a feeding group of the air 2, 2', Figures 5, 5a, 5b, 5c, 5d, one or more cyclones 4, Figures 6, 6a, 6b, 6c, one or more sieves Figures 7, 7', 7". 7a, 7a', 7a", and an engine bay 11.

### The turbine group, Figure 5

The turbine group Figure 5, includes couples of turbines 1,1' of 460 mm of diameter, with cone-shaped bent vanes. designed by the Applicant together with technicians and collaborators and arranged at 45°, they are opposed and counter-rotating.

The turbine bench houses couples of turbines 1, 1' made by fusion of P-41, an anti-abrasion alloy, instead the case and the whole bench are manufactured in the Applicant plants and use high resistance sheets of manganese steel 12%.

The rotors are supported by a mandrel produced under licence of the Applicant, and hydraulically driven.

The vanes of the rotors are bent forward, this contrivance allows obtaining in the same space a greater surface, then impressing higher speed and force to the micro-sphere.

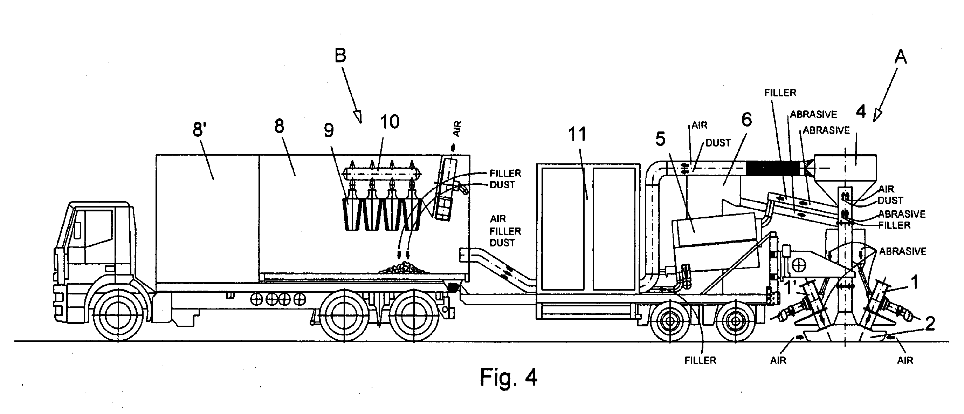

This allows a better management of the throw stream, consequently a better coverage of the surface to be treated with better precision and efficiency, Figures 4, 5.

Also the turbine bench underwent a further modification, we have designed a kind of intercooler 3, 3', Figure 5, crossing the stream of micro-spheres in the zone between the outlet of the turbine and before the contact with the ground to take away a part of the heat accumulated during the phase of acceleration.. This modification allowed us to increase the duration of the micro-spheres, furthermore to treat surfaces laid down with modified bitumen (polymeric bases) that no one of our competitors is able to treat.

Further also the feeder 2, 2' was adapted to the new multi-turbine bench, increased in size and adapted to each couple of turbines, Figures 5, 5a, 5b, 5c, 5d.

Further the PLC software controls the position to avoid the accidental opening of the valves of the abrasive.

Said turbine bench is supported by four wheel groups, that set at the four corners let it to adapt itself at the best to the road or airport surface, respectively, and is moreover provided with lateral protections of hardwearing rubber und with a series of combs of polypropylene, that provide to ensure in the presence of subsidences the greatest containment of the micro-spheres used for the treatment, Figure 4, Figures series 5.

The rotors are supported by a mandrel produced by the Applicant, automatically lubricated by a Trabon group and are hydraulically driven..
A double safety valve avoids that the opening of the abrasive or of one of the inspection covers can cause damages to things and/or people.

Further the turbine bench has the possibility to move horizontally.

### The separation group

The separation group is composed of two cyclones and two sieves, Figures 6, 6a, 6b, 6c and Figures 7, 7', 7", 7a, 7'a, 7"a.

### The cyclone, Figures 6, 6a, 6b, 6c

The cyclone 4, Figures 6, 6a, 6b, 6c has the task to remove the light powders separating them from the abrasive, using the laws of the physics of the specific weights, further allowing the downflow of the air used for the suction and the recovery of the materials on the ground.

It has been integrated by a series of interchangeable combs to slow down the flow of the abrasive, when reached, in order to avoid that the abrasive due to the high speed flows down together with the fine powders. It is made of anti-abrasion materials and covered by a silicon layer to extend its life.

The cyclones made of carbon steel sheet provide for the disposal of the powders so called "fine", that flow down together with the air toward the suction box, the remaining of the residual mixture: micro-spheres, heavy powder and further impurities go on toward the sieves.

### The sieve, Figures. 7, 7', 7", and Figures. 7', 7'a, 7"a.

The sieves 5, Figures. 7, 7', 7", and Figures. 7', 7'a, 7"a are of new generation, thanks to the Applicant, reviewed both in their components (bearings, free pins, coupling joints hydraulic motor shafts) and in their size.

Further a compressed air washing/cooling system was added.

They are of the rotating type, hydraulically driven and each with three stages of sieving, providing with a surface of 2600 mm² each for the cleaning of the micro-spheres from the inert materials.

The 3-stage rotating sieve provide for the cleaning of the abrasive grit (micro-spheres), working in depression performs the difficult task to separate the grit separating it from stones, powders and any other material that can be aspired by the machine during the working phase, sending it then to the reservoir for its re-use.

Built with carrying structure of carbon steel, supports by means of special bearings the drum 5" to which the steel nets supported by special frames mounted on rotating guide are applied, it is hydraulically driven too and protected by interception electrovalves to avoid accidental intrusions.

The cleaned grit is then sent to the reservoir for its re-use and put in circulation, while all the residual material goes together with the powders into the suction box.

The function of the 3-stage rotating sieve 5 consists of cleaning the abrasive grit. In a first stage it provides to separate the grit from the objects aspired by the machine in the working phase, in a second from the stones and in the third from the inert materials, the residual material goes together with the powders into the suction box.

The treated abrasive (micro-spheres) is taken back to the elevator, if installed in addition on the machine, otherwise cooled goes into the reservoir.

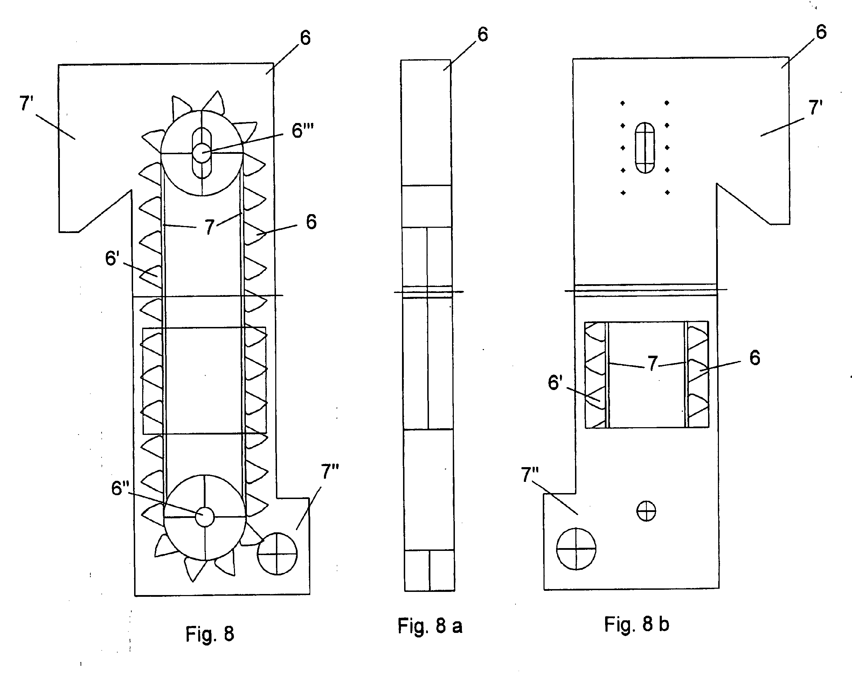

### The elevator, Figures 8, 8a, 8b

The elevator 6, Figures 8, 8a, 8b, was introduced to reduce the consumption and the heat of the abrasive.
In fact the abrasive carried by the cochlea warms itself and also because of the rubbing magnetizes attracting to it any impurity. While the elevator made of a rubber belt 7 on which metal cups 6, 6' are applied provides to transport it to the top with the arising of the said problems. Once reached the top 7' of the elevator, the abrasive is thrown toward the reservoir and before to reach its bottom 7" is crossed by a stream of air taken from outside in order to obtain a further ventilation which remove the residual fine powder with consequent reduction of the temperature of the abrasive itself, Figures 8, 8b.

### Suction group, Figure 4:

The suction group B is composed of the suction box, 8 designed by the Applicant, the washing system 10, the compressor and the fan, not shown in the figures, in the forward compartment of the box 8, and a second engine bay 8', Figure 4.

The suction box 8 is built with carrying structure of Fe360 and sandwich panels of annealed peraluman 40, this contrivance was taken both to reinforce the wall even tough light materials are used and to avoid the forming of condensates inside.

The suction box 8 is of new concept, built with sandwich panels of aluminium applied to uprights of carbon steel, to improve insulation, weight, protection against corrosion and noise. The box is placed on the back of the lorry, about 3000 mm long, 2500 mm wide and about 2200 mm high.
Provided with a lateral door for the evacuation of the powders, with controlled pneumatic opening and hydraulic overturning.

The box 8 is placed on the back of the lorry behind the driver's cab and is, preferably, about 3000 mm long, about 2500 mm wide and about 2200 mm high, built with sandwich panels of aluminium and uprights of iron, contains up to 48 and more filtering cartridges 9 of polyester 100% fire-proof, certificated BIA in class U.S,G.C., up to 18 and more cartridges Mahle 852908TII5-7.5 and up to 5 and more filtering cartridges 852826 TI15-5.

It includes at least 48 cartridges 9 of polyester fire-proof, classified self-cleaning by means of compressed air at 5 bar and provided with a device to check the stoppage and automatic control the washing

The cartridges 9 are of polyester 100% fire-proof, certificated BIA in class U,S,G,C, cone-shaped, integrated with the new type of nozzles 10. Their cone shape 9 with the help of the new type of nozzles 10 allows removing the powder particles that usually remain inside the creases of the filtering cartridge itself, allowing maintaining their filtering integrity for a longer time.

By all the previous machines the skill of the operator played a main role, because he had to prevent the wear of the filtering cartridges, monitoring the indicator of depression and acting on the control device (cyclic generator of impulses), changing the frequency of work and pause.

If for whatever reason he has not noticed this detail, the machine should have stopped because of the stoppage of the cartridges, Figure 4.

Most of the times, to prevent these drawbacks one exceeded, causing noticeable waste of compressed air, as well as to reduce the life of the filtering elements.

The subject invention of Execo, to obviate the above mentioned drawbacks, has confided the management of the whole box to the PLC, the system, besides to monitor the stoppage of the cartridges, the quantity of the treated air, the pressure difference between the two plenum chambers (treated air, air to be treated), controls the valves of the washing and the rate of the fan, reporting any undertaken action to the operator in the cabin. This has allowed a saving of applied energy both to drive the fan and to drive the compressor.

The washing managed by a monitor and control device, includes a washing system 10, of the type full immersion, equipped with nozzles, provides through a cyclic generator of impulses for the washing of the cartridges, throwing compressed air into them, automatically verifying according to the stoppage level of the cartridges times and ways of washing..

The compressed air used for the washing is generated by a toroidal vane compressor, and after filtering and cooling is stored directly into the plenum chamber placed inside the suction box in the section of the clean air, that contains together the electrovalves for the feeding of the washing nozzles, being also placed inside the suction box.

One or more centrifugal fan of at least 10000 m³/h complete the structure. The fan is centrifugal with inverted vanes, high head, and has a suction power of more than 10000 m3/h. It is made of anti-wear materials and soundproof.

Hydraulically driven it is supported by a mandrel on conical roller bearings with forced lubrication.

It is hydraulically driven and protected by a double safety valve in case of breakdown, It is supported by a mandrel on conical roller bearings and automatically lubricated by a group Trabon, Figure 4.

The machine subject of this invention is well suitable overcoming all the obstacles and drawbacks of the known technique for its use, to the cleaning and regeneration of the macro-micro roughness of the road and motorway paving, also paving of modified bitumen (polymeric bases, to the cleaning of service stations, car parks, to the removal of the traffic signs, in the field of airports to the de-gumming of the runways and the removal of the traffic signs, to the cleaning and the preparation of platbands of concrete on bridges, viaducts and tunnels and finally to the sandblasting, cleaning and recovery of the roughness on surfaces of granite, porphyry and so on.

This invention of the Applicant, includes a number of technological innovations described above in detail and very important, more detailed in the following examples, among them, not last, the inclusion of the PLC with installation of its system software for the management, control, setting and maintenance, that represents one of the key points of the functionality of the machine, the fact to allow the dialogue man-machine, the remote diagnostics, the automation of the vital functions and the display of the state of use of the machine, besides to establish the work parameters according to the external survey, eliminates the operation and setting drawbacks and reduces the complexity of use and management.

### Example 1

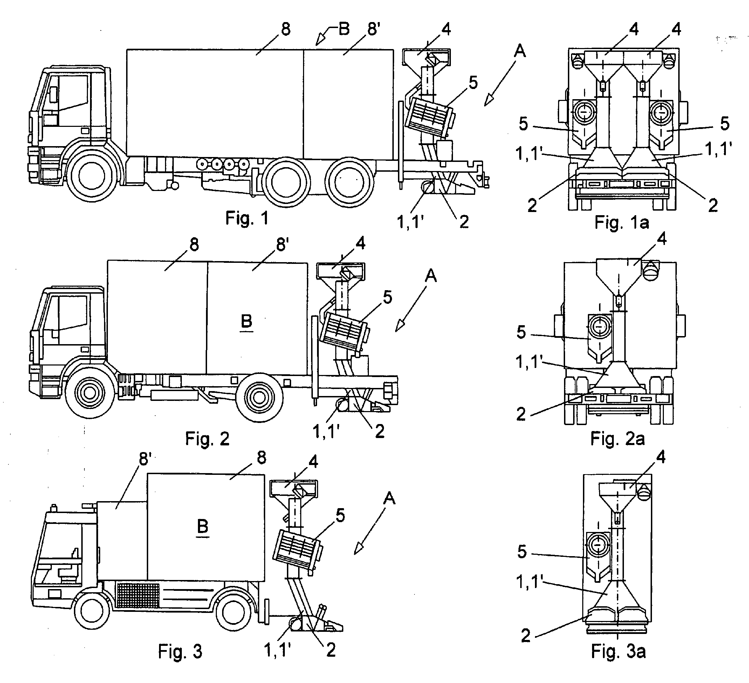

### Description of the shotpeening machine 1300 Road, Figures. 2,2a

The 1300 Road is a shotpeening machine built on a 2-axle chassis with a total capacity of 18 ton, a wheelbase of about 3600/4200 mm, a width of 2500 mm for a length of 7000 mm, characteristics however not limiting and adaptable to the needs of the customer.

Steel micro-spheres are used that are thrown by means of turbines on the surface to be treated, using a concept of recovery and a mixed air/sieve separation, it is possible to improve the operation also in presence of big holes, water puddles or excessive humidity within certain limits..

The 1300 Road includes as standard a 1300 mm work bench, can optionally houses a 600 mm bench with opposed turbines for the removal of the traffic signs.

Composed of four vital groups, better described in the following, the subject machine is controlled whether from the driver's cab of the vehicle or preferably by an optional radio control designed peculiarly for the machine with international approval.

The operator on the ground has the choice to decide the rate of feed, move as he likes the working bench, open or close the abrasive, clearly except the manoeuvres needed by the driver, who has the priority in every situation and can intervene any time because he has the prominence over every operation but he can not leave his place for safety reasons, if he does in spite of all, this will cause in fact the full stop of the machine.

All the moveable parts besides being indicated by dedicated tags/plates/labels are provided with protections, then they need dedicated keys for the opening, this also for safety reasons to avoid during the possible parking breaks in the yard or outside, that intruders, innocent or not, can put in danger the safety of themselves or of the personnel and the correct operation of the machine.

The parts at high risk, besides the above mentioned safety measures, are provided with a further protection, purposely studied mainly for the possible inattentions or faults of the operators..

During the inspection or maintenance operations, in fact, with the opening of the doors, a system verifies that the part in question is still, in case it notices a movement, besides to block it, it will immediately operate an acoustic warning such to attract the attention of the other operators and workers, (Figures.2,2a).

### The transmission group.

The transmission group designed and produced in collaboration with Omsi Trasmissioni S.p.A., represents the first of the vital points of the shotpeening machine, In fact it allows us to have a standard vehicle for the usual and normal road transfers, while in the yard a real metamorphosis occurs, the machine subject of the invention becoming hydrostatic like any other yard machine.

By a simple operation, it is in fact enough to shut off the engine of the vehicle and start the auxiliary engine, the machine is qualified to move on the yard by means of the operation of a joy-stick with clutch, at a range from 0,009 to 5 Km/h without the need to operate the gearbox and with the possibility to stop the lorry anytime, simply by breaking, really so, because even if the engine of the vehicle is off, the breaking circuit is fully efficient as well as the power steering and the lights (electrical circuit), as well as any other service or utility, being these fed by the said auxiliary engine that make up for and replace the main one by all its functions..

### The engine group:

The engine group is housed in a dedicated soundproof bay, worked out in the middle of the machine, it represents the heart, besides that already said, providing said engine the motion to the various pumps through a gearbox. The engine is an IVECO Alfo certified EPA&CARB CERTIFIED, develops 493 HP and it is a 6-cylinder in-line, it has an air acceleration system and can be controlled whether from the driver's cabin of the vehicle or outside by the possible radio control.

In the working phase it turns at full speed and by means of three 56 cc hydraulic pumps gives the motion to the two turbines and to the fan, as well as to the other utilities connected.

All the situation remains always under the supervision of the driver, he has the possibility to look steady at all the instrumentation both of the engine and of the hydraulic circuit, this anyway can not ensure to avoid a possible inattention, therefore an electronic device watches over the correct functioning of the whole device, operating first an immediate acoustical warning signal, subsequently blocking all the functions, in case the operator does not face up in the correct way to the arisen problem or to the occurred situation.

### The suction group:

The suction group is composed of the suction box, designed by the Applicant, the washing system, the compressor and the fan.

The box is placed behind the driver's cab and is ca 2000 mm long, 2500 mm wide and 2200 mm high, built with sandwich panels of aluminium and uprights of iron, includes 23 filtering cartridges of polyester 100% fire-proof, certificated BIA in class U.S,G.C., 18 Mahle 852908TII5-7.5 and 5 filtering cartridges 852826 TI15-5.

The washing controlled by a control device, washing system of the type full immersion, equipped with nozzles, provides through a cyclic generator of impulses for the washing of the cartridges, throwing compressed air into them, automatically verifying according to the stoppage level of the cartridges times and ways of washing..

The compressed air is generated by a toroidal vane compressor, and after filtering and cooling is stored directly into the plenum chamber, which contains together the electrovalves for the feeding of the washing nozzles, being also placed inside the suction box.

The fan is centrifugal with inverted vanes, high head, and has a suction power of more than 10000 m3/h. It is made of anti-wear materials and soundproof.
It is hydraulically driven and protected by a double safety valve in case of breakdown, It is supported by a mandrel on conical roller bearings and automatically lubricated by a group Trabon.

### The turbine group:

The turbine group is composed of the turbine bench, that together with the sieve and the cyclone, form shotpeening working unit.

The turbine bench houses two turbines made by fusion of P-41, an anti-abrasion alloy, instead the case and the whole bench are manufactured in the Applicant plants and use high wear resistant sheets of manganese steel.

It is supported by four wheel groups, that set at the four corners let it to adapt itself at the best to the road or airport surface, respectively, and is moreover provided with lateral protections of hardwearing rubber und with a series of combs of polypropylene, that provide to ensure in the presence of sinkings the greatest containment of the micro-spheres used for the treatment.

The rotors are supported by a mandrel produced by the Applicant, automatically lubricated by a Trabon group and are hydraulically driven..

A double safety valve avoids that the opening of the abrasive or of one of the inspection covers can cause damages to things and/or people.

### The separation group

The 3-stage rotating sieve provide for the cleaning of the abrasive grit, working in depression carries out the difficult task to separate the grit separating it from stones, powders and any other material that can be aspired by the machine during the working phase, sending it then to the reservoir for its re-use.

Built with steel nets supported by special frames mounted on rotating guide are applied, it too is hydraulically driven and protected by interception electrovalves to avoid accidental intrusions.

The cleaned grit is then sent to the reservoir for its re-use, while all the residual material goes together with the powders into the suction box..

The cyclone has the task to remove the light powders separating them from the abrasive, using the laws of the physics of the specific weights, further allowing the downflow of the air used for the suction and the recovery of the materials on the ground.

It is made of anti-abrasion materials and covered by a silicon layer to extend its life, Figure 2, 2a.

Also a version CARGY 1300 is foreseen with reduced dimensions for urban use, Figures 3, 3a.

### Example 2

### Description of the shotpeening machine 1400 Road (Figures 1, 1a)

It's a question of a machine installed on a 3-axle chassis approved for road circulation with total mass of 26 ton, a wheelbase of about 4800+1395 mm, a width of 2500 mm. and a length of about 11000 mm. The third axle steers automatically up to a speed of 40 Km/h to help during the phase of manoeuvre. The dimensions and the capacity of the vehicle have been calculated taking into account the weight added to make the engine bay soundproof, for the suction box and for the weight of the powders accumulated during the working phase.

In any case these characteristics can vary according to the requirements of the customer.

The steel micro-spheres are thrown at high speed toward the surface to be treated by means of four opposed turbines with bent vanes. The micro-spheres and the removed inert material are recovered by suction, then the mixture is sieved, improving in this way under certain conditions the use of the machine in the presence of big potholes, water puddles or excessive humidity.

Said model carries currently a working bench of 1400 mm., extensible upon request.

As option we can install a bench of 700 mm. with opposed turbines for the removal of the traffic signs.

The subject machine is composed by four vital groups, better described below and can be driven from the driver's cab but, better and easier, by an operator on the ground by means of a radio control, especially designed for the Applicant with international approval.

The ground operator can decide the speed of feed, move the working bench according to the needs, open ad close the abrasive.. His safety is ensured, the radio transmitter laced to his belt is provided with two emergency devices, a mechanic one (mushroom button) and an automatic one (anti shock). The driver of the vehicle can intervene any time, because he has the priority on all the operations but can not leave his place for safety reasons If for whatever reason that occurred, it would imply the full stoppage of the machine.

All the moveable parts, besides to be marked with dedicated warning labels, are provided with protections. Then keys are needed for the opening of the protections, to avoid that during the possible parking of the vehicle somebody can innocent put in danger the safety of himself and of personnel and the correct operation of the machine.

The high risk parts besides the already mentioned safety measures, are provided with a further protection, mainly studied to obviate possible inattentions of the operators.

During the phase of inspection or maintenance, the opening of the doors triggers a system that verifies if the part in question is still. In case it notices a movement, an automatic stoppage will occur and an acoustic warning will attract the attention of the operators.

All the functions of the auxiliary system work in positive, then if stoppage conditions occurred during the working phase, all the parts would go back to the transfer phase.

While to bring back the turbine bench during the transfer phase, the vehicle has been provided with an electric pump working autonomously from the remaining elements with manual controls to be used only and exclusively in this eventuality, (Figures 1, 1a).

### Control Group:

The dialogue unit (Monitor Touch Screen) placed at the centre of the console in the cabin allow the operator to dialog with the PLC (process control centre), consequently with the machine, leafing through the various displays he can monitor the functions, give orders and displaying the status of the services..

The PLC (process and software control centre) represents the brain of the machine, collects all the signals received by bulbs, transducers and sensors installed on the machine, controls the orders given by both the cabin operator and by the ground operator through the radio control. Autonomously, in fractions of seconds, compares the requested orders with the programmed ones and execute them. In case of incorrect manoeuvres, besides to prevent their execution, it provides for the transmission of an acoustic signal, followed by a text message to the cabin operator.

The Flash (Memory). All the commands manageable by the operators, the PLC and pf the maintenance crew are recorded on the memory card, creating a programme; using different passwords any one of the above mentioned can access the software according to his credentials, can therefore display historical data, correct system errors, modify parameters, and reset warnings. The programme (i.e. the menu) can be modified only by the dedicated personnel, any attempt to modify, copy or tamper is not authorized by the system.

If the Applicant creates updates or modify settings, can with the permission of the Customer carry out the update also via GSM and in general via Internet and mobile telephony.

The Applicant is allowed and authorized to access via GSM and in general via Internet and mobile telephony the PLC, to perform remote diagnostic, is owner of the source codes, of the rights and the licence of the software.

All the service controls of the machine are autonomous, the system does a certain numbers of checks per second (loop, monitoring, operation and maintenance software) activating ad deactivating service controls like: start of radiators, washing of filters and so on. Increasing and decreasing: oil flow, revolution rate and so.

It records all work statuses, anomalies, messages transmitted to the operator, maintenance actions and any further need of the programming phase, creating and archive (historical) that can be remotely downloaded.
In the same way a remote diagnosis of the machine can be performed.

### Transmission Group:

Produced in collaboration with Omsi Trasmissioni SpA, it represents the first vital element of shotpeening machine. In fact it allows to have available a normal vehicle for the various road transfers, while on the yard a real metamorphosis occurs, because the machine becomes hydrostatic like any yard vehicle.

With a simple operation (in fact it is enough to shut down the engine of the vehicle and start the auxiliary one) our machine can move on the yard by means of a simple joy stick with clutch, at a speed ranging from 0,3 to 4 km/h without the need to change gear and with the possibility to stop the vehicle in case of emergency, simply breaking. In fact even if the engine of the lorry is shut down, the breaking circuit is perfectly in working order, as well as the power steering, the lights and all the services. The auxiliary engine performs all the functions of the primary one and is controlled by the driver from the driver's cabin.

### Engine Group:

The motor bay is soundproof, from a study that we carried out it was possible to monitor the different frequencies (Hz) and by a package including different layers it was possible to bring the sound level to the threshold of 85 db.
Having reached good results of insulation also against the atmospheric agents, it was possible to place inside them the electric board including the PLC, the receiver of the radio control and the power board.
The auxiliary engine represents the hearth of the machine. As already said before, this engine gives motion to the various pumps through a gearbox.

It is a matter of a supercharged 6-cylinder in-line Iveco Cursor engine Euro 5, developing 450 HP, provided with an electronic Bus CAN control system interfacing the PLC.
Besides the said elements also the radiating masses are placed into the engine bay.

### Suction Group:

The suction box is of new concept, built with sandwich panels of aluminium applied to uprights of carbon steel, to improve insulation, weight, protection against corrosion and noise. The box is placed on the back of the lorry, about 3000 mm long, 2500 mm wide and about 2200 mm high.
Provided with a lateral door for the evacuation of the powders, with controlled pneumatic opening and hydraulic overturning

The cartridges 9 are of polyester 100% fire-proof, certificated BIA in class U,S,G,C, cone-shaped, integrated with the new type of nozzles 10. Their cone shape with the help of the new type of nozzles allows removing the powder particles that usually remain inside the creases of the filtering cartridge itself, allowing maintaining their filtering integrity for a longer time.

By all the previous machine the skill of the operator played a main role, because he had to prevent the wear of the filtering cartridges, monitoring the indicator of depression and acting on the control device (cyclic generator of impulses), changing the frequency of work and pause. If for whatever reason he have not noticed this detail, the machine should have stopped because of the stoppage of the cartridges.

Most of the times, to prevent this drawbacks one exceeded, causing noticeable waste of compressed air, as well as to reduce the life of the filtering elements.

The design of the Applicant, to obviate the above mentioned drawbacks, has confided the management of the whole box to the PLC, the system, besides to monitor the stoppage of the cartridges, the quantity of the treated air, the pressure difference between the two plenum chambers (treated air, air to be treated), controls the valves of the washing and the rate of the fan, reporting any undertaken action to the operator in the cabin. This has allowed a saving of applied energy both to drive the fan and to drive the compressor.
The washing managed by a monitor and control device, includes a washing system, of the type full immersion, equipped with nozzles, provides through a cyclic generator of impulses for the washing of the cartridges, throwing compressed air into them, automatically verifying according to the stoppage level of the cartridges times and ways of washing.

The compressed air used for the washing is generated by a toroidal compressor, and after filtering and cooling is stored directly into the plenum chamber placed inside the suction box in the section of the clean air.

The fan is centrifugal with inverted vanes, high head, and has a suction power of more than 10000 m3/h. It is made of anti-wear materials and soundproof. Hydraulically driven it is supported by a mandrel on conical roller bearings with forced lubrication, Figures 1, 1 a.

### Turbine Group:

The turbine bench houses at least one couple of turbines 1, 1', made by fusion of P-41, an anti-abrasion alloy. The case and the whole bench are manufactured in our plants using high resistance sheets of manganese steel 12%.
The rotors are supported by a mandrel produced under our licence and hydraulically driven.
The vanes of the rotor are bent forward, this contrivance allows obtaining in the same space a greater surface, then impressing higher velocity and force to the micro-sphere.
This allows a better management of the throw stream, consequently a better coverage of the surface to be treated with better precision and efficiency..
Also the turbine bench underwent a further modification, we have designed a kind of intercooler, crossing the stream of micro-spheres in the zone between the outlet of the turbine and before the contact with the ground to take away a part of the heat accumulated during the phase of acceleration..
This modification allows us to increase the duration of the micro-spheres, furthermore to treat surfaces laid down with modified bitumen (polymeric bases) that no one of our competitors is able to treat.
The turbine bench is supported by four wheel groups, that set at the four corners let it to adapt itself at the best to the road surface. It is moreover provided with lateral protections of hardwearing rubber und with a series of combs of polypropylene, that provide to ensure in the presence of small sinkings the greatest containment of the micro-spheres used for the treatment, Figure 5.

Further the PLC software controls the position to avoid the accidental opening of the valves of the abrasive.

### Separation Group:

The cyclones 4 have the task to remove the light powders, they have been integrated by a series of interchangeable combs to slow down the flow of the abrasive, when reached, in order to avoid that the abrasive due to the high speed flows down together with the fine powders. They are made of anti-abrasion materials and covered by a silicon layer to extend their life, Figures series 6

The sieves 5 built with carrying structure of carbon steel, support by means of special bearings the drums 5' to which the steel nets are applied, they are hydraulically driven and protected by interception electrovalves to avoid accidental intrusions too.
The function of the 3-stage rotating sieve 5 consists of cleaning the abrasive grit. In a first stage it provides to separate the grit from the objects aspired by the machine in the working phase, in a second from the stones and in the third from the inert materials, the residual material goes together with the powders into the suction box 8.
The treated abrasive is taken back to the reservoir or to the elevator 6, if the machine is provided with it, Figures series 7.

The elevator 6 was introduced to reduce the consumption and the heat of the abrasive.
In fact the abrasive carried by the cochlea warms itself and furthermore because of the rubbing magnetizes attracting to it any impurity, while the elevator made of a rubber belt 7 on which metal cups 6, 6' are applied after having recovered the abrasive from the sieve provides to transport it to the top from the reservoir 7" to recycle it once again into the sieve 5 and subject it to a cleaning by means of compressed air, avoiding problems. Once reached the top 7' of the elevator, the abrasive is thrown toward the reservoir and before to reach its bottom is crossed by a stream of air taken from outside in order to obtain a further ventilation which remove the residual fine powder with consequent reduction of the temperature of the abrasive itself, Figures series 8.

### Example 3

### Version 2000 Maxi, Figure 4.

With respect to the previous models the machine in this version is composed of two units shown in cross section, A and B.
The first unit B, composed of the first auxiliary engine bay 8', suction box 8 and transmission group is installed on a 3-axle IVECO chassis with total weight of 26 ton, wheelbase 4500 mm, whose third axle is hydraulically steering.
The second unit shotpeening machine A is installed on a trailer and includes a second engine/hydrostatic transmission group 11, a feeding group 2, 2', a turbine group 1,1' and a separation group 4, 5.

### Engine bay

The engine bay 8' houses a 220 HP Iveco Alfo engine and one of the first novelties is that it is fully sound proof, the Applicant having performed a study on the frequencies (Hz) and in collaboration with suppliers and technicians succeeded to get ready a very good insulation without neglecting the safety, in fact the insulation material is classified Class 1.

This not without difficulties, because it was necessary to redesign the cooling circuit of the engine, of the hydraulic oil and the compressor for the washing of the filtering cartridges.
Having reached a perfect insulation of the engine bay, also against the weather, the Applicant could move the power hydraulic system outside the cabin, placing it inside the engine bay itself.

Anyway the operator has the full control of all the instruments, being the control panel placed at the centre of the cabin with a very good visibility.

### The Suction Box

The suction box 8 is built with carrying structure of Fe360 and sandwich panels of annealed peraluman 40, this contrivance was taken both to reinforce the wall even tough light materials are used and to avoid the forming of condensates inside.

It 8 includes at least 48 cartridges 9 of polyester fire-proof, classified in class U,S,G,C, self-cleaning by means of compressed air at 5 bar and provided with a device to check the stoppage and automatic control the washing Two centrifugal fans of at least 10000 m³/h complete the structure

### The transmission group

The transmission group was installed on the vehicle, lorry to easy its control, to preserve the principle of operation of the vehicles, as well as to avoid unnecessary confusions of the operators.
The management and control is the same as before.

### The shotpeening machine unit

The second shotpeening machine A unit is installed on a 2-axle chariot with total weight of 18ton, about 6100 mm long.
Here the second engine bay 11, the separation group 4, 5 and the turbine group 1,1' are accommodated.

In the forward part the engine 11 is placed, a 514 HP Iveco Alfo, fully sound proof as the one before mentioned.
Also in this case the electrical power system is placed inside the engine bay, surrounded by the various heat exchangers, valves and control devices,

### The turbine group

The turbine group includes the 4 turbines 1, 1' or more couples of turbines of 460 mm of diameter, with cone-shaped bent vanes.
Designed by the Applicant together with technicians and collaborators and arranged at 45°, they are opposed and counter-rotating.

This allows a better management of the throw stream, consequently a better coverage of the surface to be treated with better precision and efficiency.. Furthermore the turbine bench can move horizontally.

Also in this version the auxiliary engines, power generator 11, hydrostatic transmission make up for the functions of the main engine that during the operating and working phases is shut off.

The auxiliary engines transmit through the gearbox the movement to the pumps that in turn drive the hydraulic motors as in the previous versions.

### The separation group

The separation groups includes two cyclones 4', 4", Figures 6, 6a, 6b, 6c and two sieves 5, Figures 7, 7', 7" and Figures 7a, 7'a, 7"a.
The cyclones 5 made of carbon steel sheet provide for the disposal of the powders so called "fine", that flow down together with the air toward the suction box 8, the remaining of the residual mixture: micro-spheres, heavy powder and further impurities go on toward the sieves 5.

The sieves 5 are of new generation, thanks to the Applicant, reviewed both in their components (bearings, free pins, coupling joints hydraulic motor shafts) and in their dimensions.

Further a compressed air washing/cooling system was added.

They are of the rotating type, hydraulically driven and each with three stages of sieving, providing with a surface of 2600 mm² each for the cleaning of the micro-spheres from the inert materials..

The Figure 7', shows the sieve with the cover 5' closed, the Figure 7'a the opened sieve showing the rotating drum 5".

### Example 4

### Elevator

Because on the model of the previous version the quantity of abrasive to be treated is very high, then the heat to be removed noticeable, in the design phase we opted for the lengthening of the run after the impact of the micro-spheres on the ground.
Therefore besides the ventilated sieves 5, Figures series 7, we have introduced in addition a cup elevator 6, 6'.
The elevator is composed of a conveyor belt 7 provided with cups 6, 6' made of AISI 304 steel.
The belt is tightened by two pulleys 6", 6'''), one of which driving, they cause that the rotating cups are forced to pass through a reservoir situated in the lower part 7" of the elevator, where the abrasive coming out from the sieves is stored.
Then the cups fill with abrasive and driven by the belt 7 go further toward the other end 7'.
On the other end 7', then on the upper part of the elevator, there is a further opening, from here a throwing force is imparted to the micro-spheres carried by the cups that are thrown toward the last cooling chamber before to come back to the store reservoir.
The cooling chamber is provided with a lateral opening and an union connected through a pipe to the vacuum suction system
From the lateral opening fresh air is aspired that flows through the falling micro-spheres, then besides to further cool them it provides to remove also the last remaining remnants of powders or material.
From here the micro-spheres fall directly in the reservoir that puts them back in circulation.

## Claims

1. High efficiency self-propelled shotpeening machine for the treatment of the paving surfaces of bitumen conglomerate, asphalt, concrete or metal, including a shotpeening unit (A) and a suction and filtering unit (B), coupled together,
wherein the shotpeening unit (A) includes means (2,2') of feeding of the external fresh air, means (1,1') for the throwing of the micro-spheres, a series of ducts for the passage of the said micro-spheres together with the impurities collected and the residual materials of the working process, means (4,5) for the separation, collection and recycling and a turbine bench provided with a feeder suitably shaped to channel the intake flow of the external air;
wherein the suction and filtering unit (B) includes an aspirator or fan, a box (8) to collect the material of the working cycle, an auxiliary and autonomous power generator (8') for the distribution of motion independently from the machine through a hydrostatic transmission and for the generation of the hydraulic and electrical power needed by all the units and utilities interlocked to the machine,
**characterised by** the fact that the turbine bench of the shotpeening unit (A) is provided with a group (1, 1') of 1 to 4 or more couples of turbines arranged at 45°, with opposed and counter-rotating cone-shaped bent vanes, with an intercooler (3) after the turbines for the cooling of the micro-spheres, being said bench able to move horizontally, orthogonal to the direction of motion;
that the shotpeening unit (A) further includes a separation group including at least two cyclones (4) provided with combs to slow the flow of the abrasive and covered in turn by an anti-abrasion protective layer, and at least two sieves (5) with rotating drum and steel grille with free pins, each one with at least three stages, provided with compressed air washing/cooling system, first for the separation of the fine powders and the residual material, then for the extraction of the cleaned micro-spheres and their recycling ;
and that the suction and filtering unit (B) includes a suction group including:
a suction box (8) with up to 48 cartridges (9) and more of polyester 100% fireproof, cone-shaped, self-cleaning by means of compressed air,
at least two centrifugal fans with inverted vanes, high head, and capable to produce a flow rate of at least 10000 m³/h, and a device to check the stoppage and automatic control the washing.

2. Shotpeening machine according to the Claim 1, **characterized in that** the suction and filtering unit (A) is installed inside the vehicle, while the shotpeening unit (B) is installed on a trailer together with the separation and recovery group, with the addition of a second engine/auxiliary power generator (11) and a second auxiliary hydrostatic transmission for the distribution of the motion, fully independent and autonomous.

3. Shotpeening machine according to the Claim 1 or 2, where the separation group includes in addition a cup elevator composed of a rubber belt (7) tightened by two pulleys (6", 6"'), one of which driving, with rotating metal cups (6, 6') applied, they caused that the rotating cups are forced to pass through the store reservoir of the abrasive, situated on the lower part (7") of the elevator.

4. Shotpeening machine according to any one of the Claims from 1 to 3, **characterised in that** it includes a system software for the management, control, setting and maintenance of the functionality of the machine, to allow the dialogue man-machine, the remote diagnostics, the automation of the vital functions and the display of the status of use of the machine, besides to establish the working parameters according to the external survey, eliminating the operational and setting drawbacks and reducing the complexity of use and control.

5. Use of the shotpeening machine according to any one of the Claims from 1 to 4 for the cleaning and regeneration of the macro-micro roughness of the road and motorway paving, also paving of modified bitumen, in particular polymeric bases.

6. Use of the shotpeening machine according to any one of the Claims from 1 to 4 for the cleaning of service stations and car parks.

7. Use of the shotpeening machine according to any one of the Claims from 1 to 4 for the removal of the traffic signs.

8. Use of the shotpeening machine according to any one of the Claims from 1 to 4 in the field of airports for the de-gumming of the runways and the removal of the traffic signs.

9. Use of the shotpeening machine according to any one of the Claims from 1 to 4 for the cleaning and preparation of platbands of concrete on bridges, viaducts and tunnels.

10. Use of the shotpeening machine according to any one of the Claims from 1 to 4 for the sandblasting, cleaning and recovery of the roughness on surfaces of granite, porphyry and the like.

## Patentansprüche

1. Eigeneingetriebene kugelstrahlende Vorrichtung mit hohen Leistungen zur Behandlung von Straßendecken aus bituminöser Mischung, Asphalt, Beton oder Metall, die eine kegelstrahlende Einheit (A) sowie eine zusammengekuppelte Absaug- und Filtriereinheit (B) enthält,
während die kugelstrahlende Einheit (A) Zuführungsmittel (2,2') der frischen Außenluft, Mittel (1, 1') zum Werfen der Mikrokugeln, eine Reihe von Leitungen zur Durchfahren der obengenannten Mikrokugeln zusammen mit der gesammelten Verunreinigungen und der Restmaterialien des Arbeitsverfahrens, Mittel (4,5) zur Trennung, Sammeln und Wiederverwendung und eine Turbinenbank enthält, die mit einer Zufuhreinrichtung ausgerüstet ist, die angepaßt ist, um den Einführstrom der Außenluft zu leiten;
während die Absaug- und Filtriereinheit (B) ein Sauggerät oder Ventilator, eine Kiste (8) zum Sammeln das Material des Arbeitsverfahren, einen Hilfs- und autonomen Krafterzeuger (8') zur Bewegungsverteilung unabhängig von der Vorrichtung durch eine hydrostatische Kraftübertragung und zur Erzeugung der hydraulischen und elektrischen Kraft, die von allen Einheiten und Einrichtigen benötigt ist, die mit der Vorrichtung verbunden sind, enthält,
**dadurch gekennzeichnet, daß**
die Turbinebank der kegelstrahlenden Einheit (A) mit einer Gruppe (1, 1') von 1 bis 4 oder mehr Paar von zu 45° aufgestellten Turbinen mit gegenübergestellten und gegendrehenden kegelförmigen gebogenen Leitschaufeln, mit einem Zwischenkühler (3) nach der Turbinen zur Kühlung der Mikrokugeln, ausgerüstet ist, während die obengenannte Bank horizontal rechtwinklig zur Bewegungsrichtung beweglich ist;
daß die kugelstrahlende Einheit (A) eine Trennungsgruppe außerdem enthält, die mindestens zwei Zyklonen (4) enthält, die mit Kämmen ausgerüstet sind, um den Fluß des Schleifmittels zu verlangsamen und von einer Schützschicht gegen Abrieb gedeckt sind, sowie mindestens zwei Siebe (5) mit drehendem Trommel und mit Gitter aus Stahl mit freien Stiften enthält, jeder mit mindestens drei Stufen, ausgerüstet mit Druckluftreinigungs-/Kühlungssystem, erst zur Trennung der dünnen Stäuben und des Restmaterial, dann zum Ausziehen der gereinigten Mikrokugeln und zur ihren Wiederverwendung;
und daß die Absaug- und Filtriereinheit (B) eine Absauggruppe enthält, die eine Absaugkiste (8) mit bis 48 und mehr 100 % aus Polyester feuerfesten kegelförmigen durch Druckluft selbstreinigenden Patronen (9), mindestens zwei zentrifugale Ventilatoren mit umgekehrten Leitschaufeln, hoch Kopf und fähig, einen Fluß von mindestens 10000 m³/h zu erzeugen and ein Gerät, um die Verstopfung zu kontrollieren und die Reinigung automatisch zu steuern, enthält.

2. Kugelstrahlende Vorrichtung gemäß Anspruch 1, **dadurch gekennzeichnet, daß** die Absaug- und Filtriereinheit (B) in der Innenseite des Fahrzeuges aufgestellt wird, während die kugelstrahlende Einheit (A) auf einem Anhänger zusammen mit der Trennungs- und Wiederverwendungsgruppe aufgestellt wird, mit dem Zusatz eines zweiten Antriebes/Hilfskrafterzeugers (11) und einer zweiten voll unabhängigen und autonomen hydrostatischen Hilfskraftübertragung zur Verteilung der Bewegung.

3. Kugelstrahlende Vorrichtung gemäß Anspruch 1 oder 2, während die Trennungsgruppe einen Becherheber zusätzlich enthält, der von einem Gummigurt gebildet wird, der von zwei Riemenscheiben (6", 6"') gespannt wird, eine von denen leitende, mit eingebauten drehenden Metallbecher (6, 6'), sie verursachen, daß die drehende Becher gezwungen werden, durch den Behälter des Schleifmittels zu gehen, das auf dem unteren Teil (7") des Hebers gestellt wird.

4. Kugelstrahlende Vorrichtung gemäß einem beliebigen Anspruch von 1 bis 3, **dadurch gekennzeichnet, daß** sie eine System-Software zur Leitung, Steuerung, Einstellung und Instandhaltung der Funktionstüchtigkeit der Vorrichtung enthält, um den Dialog Mann-Maschine, die Ferndiagnostik, die Automation der wichtigsten Funktionen und die Darstellung des Benutzungszustand der Vorrichtung zu erlauben, außerdem um die Arbeitsparameter gemäß dem Außenbegutachtung zu stellen, mit der Beseitigung der Operations- und Einstellungsunannehmlichkeiten und der Minderung der Benutzungs- und Steuerungskomplexität.

5. Benutzung der kugelstrahlenden Vorrichtung gemäß einem beliebigen Anspruch von 1 bis 4 zur Reinigung und Wiederherstellung der Makro-/Mikrorauheit der Straßen- und Autobahnendecke, auch Decke aus modifizierten Bitumen, insbesondere Polymer.

6. Benutzung der kugelstrahlenden Vorrichtung gemäß einem beliebigen Anspruch von 1 bis 4 zur Reinigung von Tankstellen und Parkplätzen.

7. Benutzung der kugelstrahlenden Vorrichtung gemäß einem beliebigen Anspruch von 1 bis 4 zur Entfernung von Verkehrszeichen.

8. Benutzung der kugelstrahlenden Vorrichtung gemäß einem beliebigen Anspruch von 1 bis 4 im Flughafenbereich zum Degummieren der Start- und Landebahnen und Entfernung von Verkehrszeichen.

9. Benutzung der kugelstrahlenden Vorrichtung gemäß einem beliebigen Anspruch von 1 bis 4 zur Reinigung und Anfertigung von Gurtplatten aus Beton auf Brücken, Überführungen und Tunnels.

10. Benutzung der kugelstrahlenden Vorrichtung gemäß einem beliebigen Anspruch von 1 bis 4 zur Sandstrahlung, Reinigung und Wiederherstellung der Rauheit auf Flachen aus Granit, Porphyr und ähnlichen Stoffen.

## Revendications

1. Machine à grenailler autopropulsée à haute efficacité pour le traitement des surfaces de pavage en enrobé, asphalte, béton ou métal, comprenant une unité de grenaillage (A) et une unité d'aspiration et de filtrage (B), connectées l'une à l'autre,
où l'unité de grenaillage (A) comprend des moyens (2, 2') d'alimentation de l'air frais extérieur, des moyens (1, 1') pour projeter des micro-billes, une série de tuyaux pour le passage des dites micro-billes avec les impuretés rassemblées et les matériels restants du procédé de travail, des moyens (4, 5) pour la séparation, le ramassage et le recyclage et un banc de turbines équipé d'un convoyeur d'une forme convenable pour canaliser le flux d'entrée de l'air extérieur;
où l'unité d'aspiration et de filtrage (B) comprend un aspirateur or ventilateur, une boîte (8) pour recueillir le matériel du cycle de travail, un générateur autonome auxiliaire (8') pour la distribution du mouvement indépendamment de la machine au moyen d'une transmission hydrostatique et pour la génération de la puissance hydraulique et électrique nécessaire pour toutes les unités et les services connectés à la machine,
**caractérisée par le fait, que**
le banc de turbines de l'unité de grenaillage (A) est équipé d'un group (1, 1') de 1 à 4 ou plus couples de turbines disposées à 45° avec des aubes recourbées coniques opposées et contrarotatives, avec un refroidisseur intermédiaire (3) après les turbines pour le refroidissement des micro-billes, étant dit banc capable de se déplacer horizontalement, orthogonal à la direction du mouvement;
que l'unité de grenaillage (A) comprend de plus un group de séparation comprenant au moins deux cyclones (4) équipés de déflecteurs pour ralentir le flux de l'abrasif et recouverts à leur tour d'une couche de protection anti-abrasion, et au moins deux cribles (5) avec tambour rotant et grille d'acier avec pivots libres, chacun avec au moins trois étages, équipés d'un système de lavage/refroidissement à air comprimé, avant tout pour la séparation des poudres fines et du matériel résiduel, puis pour l'extraction des micro-billes nettoyées et leur recyclage;
et que l'unité d'aspiration et de filtrage (B) comprend un group d'aspiration comprenant une boîte d'aspiration (8) avec jusqu'à 48 cartouches (9) et plus de polyester 100 % résistant au feu, coniques, auto-nettoyant au moyen d'air comprimé, au moins deux ventilateurs centrifuges avec aubes inversées, tête haute, et capable de produire un flux d'au moins 10000 m³/h et un appareil pour vérifier l'arrêt et contrôler automatiquement le lavage.

2. Machine à grenailler selon la revendication 1, **caractérisée par le fait, que** l'unité d'aspiration et de filtrage (B) est installée à l'intérieur du véhicule, alors que l'unité de grenaillage (A) est installée sur une remorque avec le group de séparation et recyclage, avec adjonction d'une deuxième moteur/générateur de puissance auxiliaire (11) et une deuxième transmission hydrostatique auxiliaire pour la distribution du mouvement, complètement indépendante et autonome.

3. Machine à grenailler selon la revendication 1 or 2, où le group de séparation comprend de plus un élévateur à godet composé d'une courroie caoutchouc (7) tensionnée par deux poulies (6", 6"'), une desquelles motrice, avec des godets métalliques tournants (6, 6') appliqués; elles font en sorte que les godets tournants sont forcés à traverser le réservoir de stockage de l'abrasif, placé sur la part inférieure (7") de l'élévateur.

4. Machine à grenailler selon une revendication quelconque de 1 à 3, **caractérisée par le fait, que** elle comprend un logiciel de système pour le management, le contrôle, le réglage et la maintenance du bon fonctionnement de la machine, pour permettre le dialogue homme-machine, le diagnostic à distance, l'automation des fonctions vitales et l'affichage de l'état d'emploi de la machine, en plus d'établir les paramètres de travail selon l'enquête extérieure, en éliminant les inconvénients de service et de réglage et réduisant la complexité de emploi et de contrôle.

5. Emploi de la machine à grenailler selon une revendication quelconque de 1 à 4 pour le nettoyage et la régénération de la macro/micro rugosité des surfaces de pavage des routes e des autoroutes, aussi pavages en bitumes modifiés, particulièrement polymères.

6. Emploi de la machine à grenailler selon une revendication quelconque de 1 à 4 pour le nettoyage des stations service et des parkings.

7. Emploi de la machine à grenailler selon une revendication quelconque de 1 à 4 pour l'enlèvement de la signalisation routière.

8. Emploi de la machine à grenailler selon une revendication quelconque de 1 à 4 dans le domaine des aéroports pour l'enlèvement de résidus de caoutchouc et de la signalisation sur les pistes.

9. Emploi de la machine à grenailler selon une revendication quelconque de 1 à 4 pour le nettoyage et la préparation de plate-bandes en béton sur ponts, viaducs et tunnels.

10. Emploi de la machine à grenailler selon une revendication quelconque de 1 à 4 pour le sablage, nettoyage et régénération de la rugosité sur surfaces de granit, porphyre et d'autres matériels similaires.
